(19) Europäisches Patentamt
European Patent Office
Office européen des brevets

(11) EP 2 727 955 B1

(12) **EUROPEAN PATENT SPECIFICATION**

(45) Date of publication and mention
of the grant of the patent:
**27.04.2016 Bulletin 2016/17**

(21) Application number: **13191795.7**

(22) Date of filing: **06.11.2013**

(51) Int Cl.:
*C08J 9/10* (2006.01)          *B60J 10/00* (2016.01)
*B60R 13/06* (2006.01)         *C08L 23/16* (2006.01)
*C08L 93/00* (2006.01)

(54) **FOAM RUBBER MATERIAL FOR WEATHER STRIP**

**SCHAUMGUMMIMATERIAL FÜR DICHTUNGSSTREIFEN**

**MATÉRIAU EN MOUSSE DE CAOUTCHOUC POUR BANDE DE CALFEUTREMENT**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.11.2012 JP 2012244775**
              **30.10.2013 JP 2013225751**

(43) Date of publication of application:
**07.05.2014 Bulletin 2014/19**

(73) Proprietor: **Nishikawa Rubber Co., Ltd.**
**Nishi-ku, Hiroshima-shi, Hiroshima-ken 733 (JP)**

(72) Inventor: **Kijima, Michio**
**Hiroshima-ken, 733-8510 (JP)**

(74) Representative: **Gill Jennings & Every LLP**
**The Broadgate Tower**
**20 Primrose Street**
**London EC2A 2ES (GB)**

(56) References cited:
**US-A- 5 972 492      US-A1- 2012 277 337**

**Description**

Technical Field

The present invention relates to a foam rubber material for a weather strip.

Background Art

Foam rubber materials have been applied as sealant members to watertight performance-requiring sites of various weather strip products such as trunk weather strips and door opening weather strips.

In many products, non-drying sealants have been applied to the watertight performance-requiring sites. However, the non-drying sealants have problems such as (1) high production cost because of necessity of expensive special equipment in a step of injecting the sealant into a fitted portion of the product, (2) occurrence of variations in injected amounts thereof, (3) inability to reassemble the sealant because once it is assembled to a vehicle body in assembling it adheres to the vehicle body side, and (4) large compression set value thereof (i.e., the compression set being poor).

Patent Document 1 copes with these problems, and discloses a sealant member formed from a pressure-sensitive adhesive that is a synthetic resin-based or rubber-based base material having a glass transition point of -10°C or less and is in a foamed state. It is described therein that the sealant member has high power to hold a flange and reassembling thereof can be made easily.

However, since this material is not crosslinked, it has a problem of large compression set value.

On the other hand, crosslinked rubber sponge materials have been used as sealant members for a weather strip. However, such a sealant member may be "lifted up" from a flange, which causes a problem of failing to have a satisfactory watertight performance. Therefore, there has been a problem of having restrictions on the cross-section of applicable products and the shape of sponge portions. In Patent Documents 2 and 3, it is described that crosslinked rubber sponge materials can have improved flexibility by lowering the compressive load, resulting in improvement of sealing properties.

Citation List

Patent Documents

[Patent Document 1] JP-A-2008-87505
[Patent Document 2] JP-A-2011-116882
[Patent Document 3] JP-A-2012-17452

Summary of the Invention

Problems That the Invention Is to Solve

However, although it is possible to decrease the compressive load by making foam expansion rate of the sponge material high or making cells continuous (i.e., increasing water absorption rate), the strength of the sealant member is decreased thereby. Accordingly, the sponge material becomes easily breakable. Further, with high water absorption rate, watertight performance is deteriorated.

In order to cope with the problems described above, it has been desired to improve the crosslinked rubber sponge material as the sealant member for a weather strip.

The present invention provides a foam rubber material comprising a crosslinked rubber sponge material having high watertight performance and excellent sealing properties, and further provides a sealant member for a weather strip, comprising the foam rubber material.

Means for Solving the Problems

The present invention relates to a sealant member for a weather strip and provides the following foam rubber materials and sealant member.

(1) A foam rubber material for a weather strip, comprising a crosslinked rubber sponge material having a load value ratio satisfying the following relationship:

load value ratio (%) = B/A×100≤50,

wherein A is a load value at 50% compression in the course of compression deformation from an uncompressed state, and B is a load value at 50% compression in the course of returning from the deformation to an uncompressed state.

(2) The foam rubber material for a weather strip described in (1) above, wherein A is 10 N/cm$^2$ or less, and B is 3 N/cm$^2$ or less.

(3) The foam rubber material for a weather strip described in (1) or (2) above, having a specific gravity of from 0.05 to 0.40 based on the density of water (1.0g/cm$^3$).

(4) The foam rubber material for a weather strip described in any one of (1) to (3) above, having a water absorption rate of from 1 to 100% and a tan δ (loss elastic modulus/storage elastic modulus) value at a standard temperature (23°C) of 0.125 or more.

(5) A sealant member for a weather strip, comprising the foam rubber material described in any one of (1) to (4) above.

Effect of the Invention

The present invention can provide a foam rubber material for a weather strip, comprising a crosslinked rubber sponge material that is softer, has high watertight performance and has excellent sealing properties without decreasing the mechanical strength. By using the foam rubber material, an excellent sealant member for a weather strip can be obtained, and particularly, it has an advantage that there are few restrictions in the shape thereof.

Brief Description of the Drawings

Fig. 1 is a view for illustrating a level difference structure used in the watertight test of the Examples.

Fig. 2 is a view for illustrating an apparatus used in the watertight test of the Examples, which schematically shows a cross-section perpendicular to the longitudinal direction of a weather strip.

Fig. 3 is a view for illustrating an application example of a sealant member of the present invention.

Fig. 4 is a view for illustrating an application example of a sealant member of the present invention.

Fig. 5 is a view for illustrating an application example of a sealant member of the present invention.

Fig. 6 is a view for illustrating an application example of a sealant member of the present invention.

Fig. 7 is a view for illustrating an application example of a sealant member of the present invention.

Fig. 8 is a view for illustrating the measurement protocol of the compressive characteristic of a crosslinked rubber sponge material.

Fig. 9 is a view showing a load value chart observed in a compressive load test of a crosslinked rubber sponge material.

Fig. 10 is a graph showing compressive characteristics of crosslinked rubber sponge materials. Solid circles are data of Example 1, and solid triangles are data of Comparative Example 1.

Fig. 11 is a graph showing changes in tan δ with respect to temperature of a crosslinked rubber sponge material. Solid circles are data of Example 1, and solid triangles are data of Comparative Example 1.

Fig. 12 is a graph showing changes in 50% compressive load value with respect to the amount of a terpene-based resin added to a crosslinked rubber sponge material.

Embodiments for Carrying Out the Invention

The present invention has been made by finding that a "lifted up" state of a sealant member comprising a crosslinked rubber sponge material from a flange is a phenomenon that occurs because repulsive power of the sealant member exceeds holding power thereof at a fitted portion in assembling a weather strip to a vehicle body.

That is to say, it was found that in order to prevent the above-mentioned lifted-up state from the flange, rather than having a low load value in the course of compression deformation (i.e., a low repulsive power against compression), having a low ratio of a load value in the course of returning from the deformation to a load value in the course of compression deformation is appropriate for the crosslinked rubber sponge material serving as the sealant material for a weather strip. The present invention has been completed based on this finding.

According to the present invention, a foam rubber material significantly improved in sealing properties can be obtained by lowering the load value ratio (i.e., the ratio of a load value at 50% compression in the course of returning from the deformation to a load value at 50% compression in the course of compression deformation) to be smaller than conventional materials, without substantially changing the expansion ratio or the open-cell ratio, that is to say, without substantially decreasing the mechanical strength. Thereby the present invention can provide an excellent sealant member for a weather strip. In the present invention, attention is given to the load value in the course of compression deformation, which usually attracts attention in a compressive load test, and also to the load value toward a recovering direction (the load value in the course of returning from the deformation), because the weather strip is intended to be suppressed from being lifted up from the flange after assembling thereof to the vehicle body. Thus, it has been found that the ratio (load value ratio) of these load values at 50% compression in the course of compression and in the course of return largely contributes to excellent sealing properties.

The present invention has achieved excellent sealing properties while substantially maintaining the same specific gravity and water absorption rate as those of the conventional crosslinked rubber sponge materials, that is to say, while ensuring strength equivalent to or higher than that of the conventional materials. It is preferred to lower the load values at 50% compression in the course of compression deformation and in the course of returning from the deformation, particularly the latter, considerably as compared to those of the conventional materials.

In the foam rubber material of the present invention, the load value ratio (i.e., the ratio of a load value at 50% compression in the course of returning from the deformation to a load value at 50% compression in the course of compression deformation) is 50% or less, preferably 45% or less, more preferably 40% or less, still more preferably 30% or less, and particularly preferably 25% or less. The lower limit thereof is about 1% to 5%.

Further, for the foam rubber material of the present invention, a load value at 50% compression in the course of compression deformation is preferably 10 $N/cm^2$ or less, more preferably 8 $N/cm^2$ or less, still more preferably 7 $N/cm^2$ or less, particularly preferably 6 $N/cm^2$ or less, and most preferably 5 $N/cm^2$ or less. The lower limit thereof is usually about 1 $N/cm^2$. Furthermore, a load value at 50% compression in the course of returning from the deformation is preferably 3 $N/cm^2$ or less, more preferably 2 $N/cm^2$ or less, still more preferably 1.5 $N/cm^2$ or less, and particularly preferably 1 $N/cm^2$ or less.

In addition, the foam rubber material of the present invention preferably has a tan $\delta$ (loss elastic modulus/storage elastic modulus) value at a standard temperature (23°C) of 0.125 or larger, more preferably 0.13 or larger, still more preferably 0.14 or larger, and particularly preferably 0.15 or larger. The tan $\delta$ is usually the loss coefficient (loss tangent), and the upper limit thereof is about 1.4. Further, the foam rubber material of the present invention preferably has a compression set rate (Cs) for 50% compression in accordance with JIS K6262 (2006) of 70% or less.

Further, the foam rubber material of the present invention preferably has a specific gravity of from 0.05 to 0.4, more preferably from 0.1 to 0.4, and still more preferably from 0.2 to 0.4, and preferably has a water absorption rate of from 1 to 100%, more preferably from 2 to 50%, and still more preferably from 5 to 30%.

According to the present invention, a foam rubber material excellent in sealing properties and suitable for the sealant member for a weather strip can be provided by satisfying the above-mentioned load value ratio at 50% compression, preferably by satisfying each of the above-mentioned load values at 50% compression in the course of compression deformation and in the course of returning from the deformation. Further, a foam rubber material high in watertight performance, excellent in sound insulation, durability, rust resistance and the like and suitable for the sealant member for a weather strip can be provided by also satisfying the above-mentioned specific gravity, water absorption rate, tan $\delta$ and Cs.

In the present invention, the load values at 50% compression in the course of compression deformation and in the course of returning from the deformation are measured in accordance with JIS K6767 (2007) under the conditions of compression/returning rates of 20mm/min, the specific gravity is measured in accordance with JIS K7112 (2007), method A, and the water absorption rate is measured according to the following measuring method.

<Measuring Method of Water Absorption Rate>

(1) Test Specimen

A test specimen having a length of 30 mm or 40 mm and a width of 20 mm is obtained from a sheet-shaped foam rubber vulcanized with hot air and having a thickness of 2.5 mm or 3 mm.

(2) Measuring Device

There is used a measuring device equipped with a balance that can measure the mass down to 1/1000 g, a glass container having a depth of 150 mm and a volume of about 1000 ml, a corrosion-resistant wire cloth for holding the test specimen, a pressure reducing unit in which the glass container can be housed, and a mercury manometer for measuring a pressure-reduced state thereof.

(3) Measuring Method

The mass of the test specimen is measured, and the test specimen is immersed in distilled water controlled to 23 to 25°C in such a manner that the upper end of the test specimen reaches a depth of 50 mm below the water surface. Then, the system is placed at a temperature of 23 to 25°C for 3 minutes under a reduced pressure of 17 kPa. After a lapse of time of 3 minutes, the system is returned to the atmospheric pressure, and allowed to stand for 3 minutes as it is. Thereafter, the test specimen is taken out of the water, and water drops adhered to the surface thereof are wiped off, followed by measurement of the mass thereof.

(4) Calculation Method

The water absorption rate is determined by the following equation:

$$Wa = (W_1 - W_0)/W_0 \times 100$$

Wa: Water absorption rate [%]
$W_0$: Mass before treatment
$W_1$: Mass after treatment

(5) Results

The result of the water absorption rate measurement is indicated by the arithmetic mean value of thrice measurement results.
The foam rubber material for a weather strip of the present invention comprises a crosslinked rubber sponge material. The present invention is achieved by introducing a pressure-sensitive adhesive thereto. The pressure-sensitive adhesive may be either crosslinked or not, or both thereof. By introducing the pressure-sensitive adhesive to the foam rubber material, there are advantages that it becomes easy to satisfy the above-mentioned physical characteristics and that the foam rubber material also has good handling properties.
Ingredients of the crosslinked rubber sponge material include a rubber, a pressure-sensitive adhesive, a crosslinking agent, carbon black, an inorganic filler, a softening agent, a foaming agent, a vulcanization accelerator and the like, and these may be appropriately selected and used. Incidentally, the crosslinked rubber sponge material of the present invention may be physically foamed without using any foaming agent.
Examples of the rubber include ethylene-$\alpha$-olefin copolymers [EPDMs: ethylene-$\alpha$-olefin-non-conjugated diene copolymers, wherein examples of the nonconjugated diene include 1,4-hexadiene, dicyclopentadiene, and 5-ethylidene-2-norbornene, and examples of the $\alpha$-olefin include propylene, 1-butene, 1-pentene, 1-hexene, 4-methyl-1-pentene, 1-octene, and 1-decene], styrene-butadiene copolymer rubber (SBR), chloroprene rubber (CR), natural rubber (NR), and isoprene rubber (IR). In particular, ethylene-$\alpha$-olefin copolymers are preferred from the viewpoint of high weather resistance and easy handling.
Examples of the pressure-sensitive adhesive include terpene-based resins (for example, such as terpene polymers, terpene-phenol copolymers and aromatic hydrocarbon-modified terpene polymers), aliphatic petroleum resins, alicyclic petroleum resins, aromatic petroleum resins, coumarone-indene resins, styrenic resins, cyclopentadiene resins, phenolic resins, xylene resins, rosin, modified rosin, and rosin esters. Of these, terpene-based resins are preferred, and terpene-based resins having a weight average molecular weight of 500 to 1,000, preferably 600 to 900, and a glass transition point of 30 to 100°C, preferably 40 to 90°C, are more preferred.
The crosslinking agent includes sulfur, peroxides and the like.
The inorganic filler includes calcium carbonate and the like.
The softening agent includes liquid polybutene, mineral oil, liquid polyisobutylene, liquid polyacrylic esters and the like, and the foaming agent includes azo compounds, nitroso compounds, hydrazine derivatives, sodium bicarbonate-based compounds and the like. The vulcanization accelerator includes thiazole-based compounds, thiuram-based compounds and the like.
The foam rubber material of the present invention can be produced by appropriately selecting the above-mentioned ingredients and adjusting their blending ratio. For example, when EPDM is used as the rubber, it is preferred that the terpene-based resin is used in an amount of 3 to 75 parts by mass, preferably 10 to 70 parts by mass, more preferably 30 to 65 parts by mass, and particularly preferably 40 to 60 parts by mass, based on 100 parts by mass of EPDM. When the blending ratio of the terpene-based resin is equivalent to or higher than the lower limit of the above-mentioned range, the threshold value of the compressive load and the tan $\delta$ of the present invention can be sufficiently satisfied. Further, when the blending ratio is equivalent to or lower than the upper limit of the above-mentioned range, a rubber kneading operation can be successfully performed. Therefore, the above-mentioned range is preferred. In addition, 0.5 to 2.0 parts by mass of the crosslinking agent and 5 to 30 parts by mass of the foaming agent may be further used as other blending ingredients.

The foam rubber material of the present invention can be basically produced in accordance with methods for producing conventional crosslinked rubber sponge materials. Specifically, the foam rubber material can be obtained by heating, crosslinking and foaming a kneaded product of the above-mentioned ingredients. In crosslinking and foaming, conventionally known methods and apparatuses can be used, and a mold, the temperature, the pressure, the heating and pressurizing times and the like are appropriately selected.

The foam rubber material of the present invention is included in a weather strip as a sealant member to serve as a watertight part, a sound insulation or sound absorption part, or a buffer part or a vibration absorption part for impact resistance use. Each of these parts may be formed integrally with the weather strip (for example, may be subjected to composite molding at the time of extrusion). Alternatively, they may be separately formed, and then, the sealant member may be press-bonded on or attached using an adhesive or the like to a weather strip not having, for example, a watertight part.

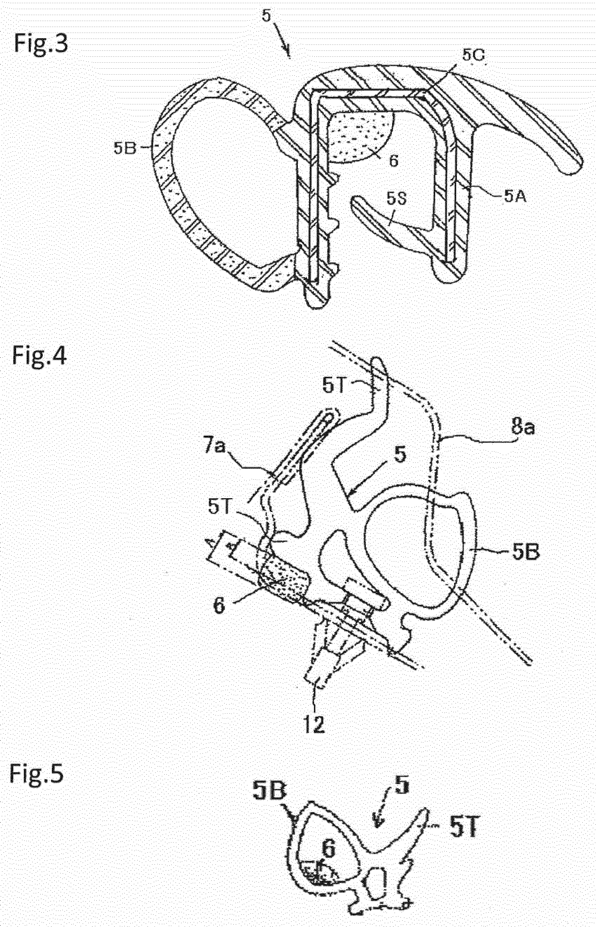

Examples of application of the foam rubber material of the present invention as the sealant member include, for example, embodiments as shown in Figs. 3 to 7. Fig. 3 is an example in which the foam rubber material of the present invention is applied to a door opening weather strip 5, and shows a cross-section of a sealant member 6 mounted in a position in which the same function as that of the weather strip used in the watertight test described later is exerted. A grip part 5A having an approximately U-shaped cross-section is provided with a claw part 5S that firmly grabs a flange of a vehicle body. Fig. 4 is an example in which the foam rubber material of the present invention is applied to a door weather strip 5, and shows a cross-section of another embodiment in which a sealant member 6 is used on a periphery of a base part of the weather strip 5 fixed with a clip 12. For example, it can function for watertight use. Numeral 7a designates a door panel, numeral 8a designates a body panel and numeral 5T designates a seal lip. Fig. 5 shows a sealant member 6 mounted inside a sealing part 5B of a weather strip 5. This is effective for sound insulation such as abnormal noise prevention.

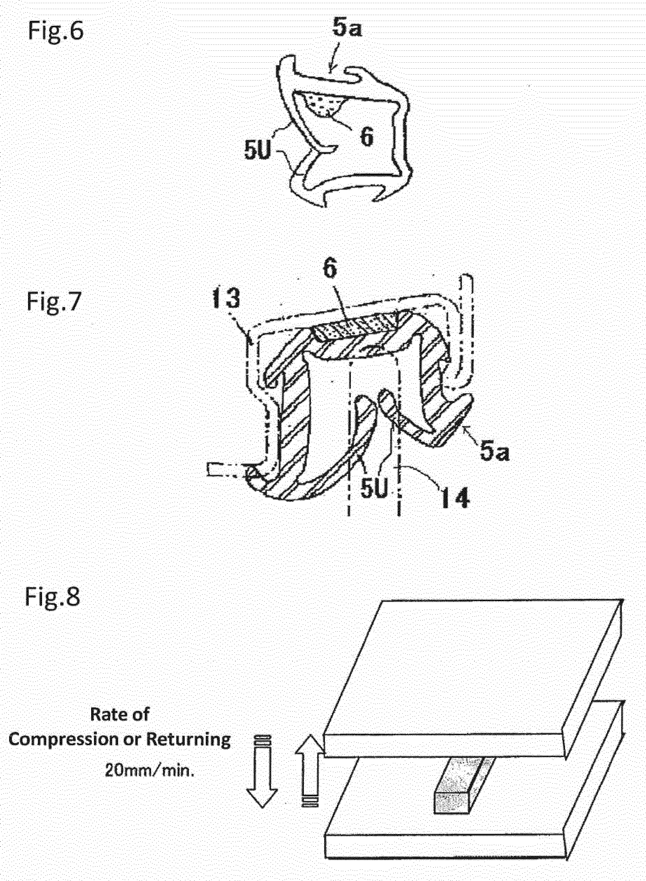

Fig. 6 shows a cross-section vertical to the longitudinal direction of a glass run, and a sealant member 6 is mounted inside the glass run 5a. This is effective for abnormal noise prevention and the like. Numeral 5U designates lip parts in which a glass slidably moves up and down in a vertical direction to the paper, or through which a glass enters and retracts in a horizontal direction on the paper.

Fig. 7 also shows a cross-section vertical to the longitudinal direction of a glass run, similarly to Fig. 6, and a sealant member 6 is mounted between the glass run 5a and a door sash 13. This is effective for reducing an end-hitting sound that occurs when a door glass is moved up to be closed. Numeral 5U designates a lip part similar to that shown in Fig. 6, and numeral 14 designates a glass.

Examples

The present invention will be described in details below with reference to examples, but the present invention should not be construed as being limited to these examples.

Example 1 and Comparative Example 1

Blending ingredients (parts by mass) shown in Table 1 were kneaded to obtain rubber compositions, which were extrusion molded into a sheet form, and vulcanized and foamed in a high-temperature atmosphere to produce crosslinked rubber sponge materials (foam rubber materials).

Table 1

|  | Example 1 | Comparative Example 1 |
|---|---|---|
| (a) Olefin-Based Rubber | 100 | 100 |
| (b) Terpene-Based Resin | 50 | - |
| (d) Carbon Black | 60 | 60 |
| (e) Inorganic Filler | 10 | 10 |
| (f) Softening Agent | 90 | 90 |
| (c) Foaming Agent | 15 | 15 |
| (g) Crosslinking Agent | 1 | 1 |
| (h) Vulcanization Accelerator | 8 | 8 |

(continued)

|  | Example 1 | Comparative Example 1 |
|---|---|---|
| Total (parts by mass) | 334 | 284 |

In Table 1, ingredient (a) is an ethylene-$\alpha$-olefin-based copolymer rubber, specifically EPDM, ingredient (b) is a terpene resin (YS Resin TO-105 (manufactured by Yasuhara Chemical Co., Ltd.)), ingredient (c) is ADCA (azodicarbonamide) and OBSH (oxy-bis-benzene-sulfonylhydrazide), and ingredient (g) is sulfur.

Characteristics of the crosslinked rubber sponge materials obtained were evaluated as described below. For all except (3) and (4), the average of thrice measurements was taken as the result. The results are shown in Table. 2.

(1) Specific gravity: A test specimen having a length of about 40 mm was used.

(2) Water absorption rate: A test specimen having a length of about 40 mm was used.

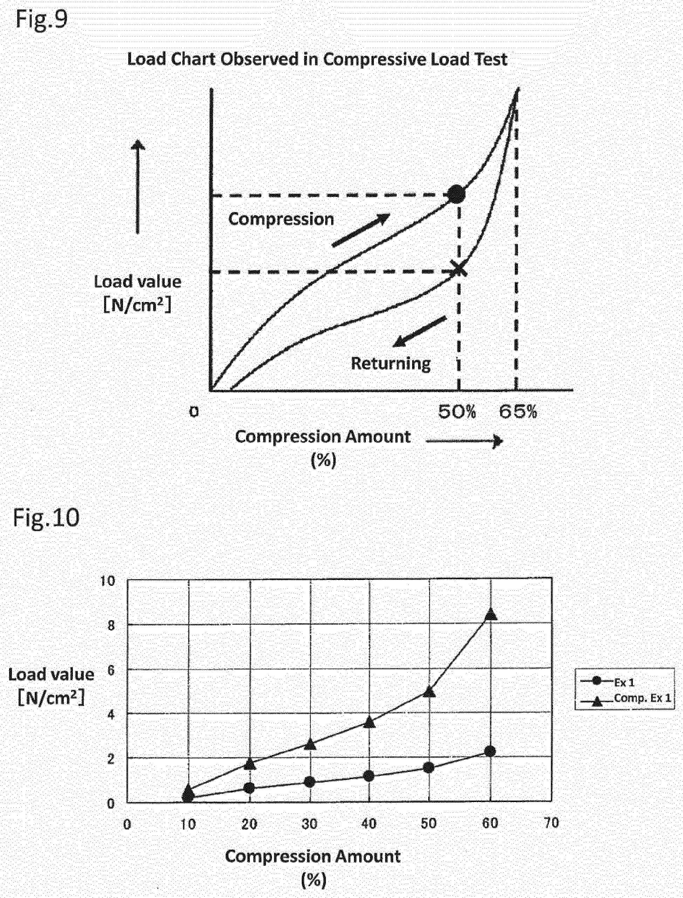

(3) Load values at 50% compression in the course of compression deformation from an uncompressed state and in the course of returning from the deformation to an uncompressed state: A test specimen having a thickness of 2.5 mm, a width of 5.0 mm and a length of 100 mm was prepared. The test specimen was compressed until it's height was reduced to 35% of the height of each sample(0.88 mm), namely up to 65% compression, using a flat metal plate by an autograph in the manner as shown in Figs. 8 and 9 in accordance with JIS K6767 (2007). At the same time when the compression amount reached 65%, the metal plate was moved to the opposite (returning) direction, and changes in load value during that time were measured. The load values at 50% compression in the course of compression deformation and in the course of returning from the deformation were determined. The compression rate and the returning rate were each 20 mm/min, and the load values in the course of initial compression and returning were used. Load values measured in the course of compression at compression amounts of 10% to 60% are shown in Table 3, and load values at 50% compression measured in the course of compression and in the course of returning are shown in Table 4 together. The load values in the course of compression are also shown in Fig. 10. Further, the ratio of load values in the course of compression and in the course of returning is shown as the load value ratio. [The load value ratio (%) = (load value at 50% compression in the course of returning/load value at 50 % compression in the course of compression)$\times$100]

(4) Tan $\delta$:

Testing device: RSA-G2 manufactured by TA Instruments, Japan

Size of test specimen: (width: 5.5 mm, length: 20 mm, thickness: 1.5 mm)

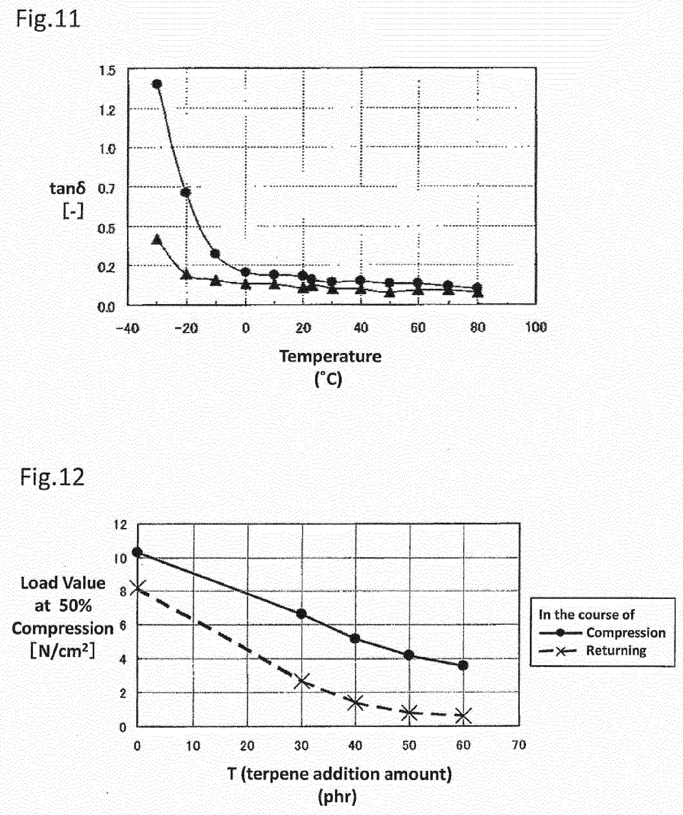

Measurement was made at a measurement strain (extension in a longitudinal direction of a test specimen of 0.1 to 2%, which varies depending on the measurement temperature), a measurement frequency of 1 Hz, measurement temperatures of -80 to 150°C and a rate of temperature increase of 5°C/min, and data at 23°C were taken an shown in Table 2. The tan $\delta$ at each temperature is shown together in Fig. 11, and Table 5 additionally shows the measurement strain (vibration strain).

(5) TB (tensile strength): in accordance with JIS K6251 (2006), shape: Dumbbell No.2, tension rate: 200 mm/min

(6) EB (elongation): in accordance with JIS K6251 (2006), shape: Dumbbell No.2, tension rate: 200 mm/min

(7) Cs (compression set rate): in accordance with JIS K6262 (2006), 50% compression, test specimen length: about 100 mm, test temperature: 70°C, test period: 22 hr

Table 2

|  | Example 1 | Comparative Example 1 |
|---|---|---|
| Specific Gravity [-] | 0.3 | 0.3 |
| Water Absorption Rate [%] | 13 | 14 |
| Load Value at 50% Compression in the course of Compression [N/cm$^2$] | 1.50 | 5.00 |
| Tan $\delta$ | 0.154 | 0.120 |
| TB [MPa] | 0.2 | - |
| EB [%] | 250 | - |
| Cs (70°Cx22 hr) [%] | 70 | - |

EP 2 727 955 B1

Table 3

| | | [N/cm²] |
|---|---|---|
| Compression Amount [%] | Example 1 | Comparative Example 1 |
| 10 | 0.22 | 0.58 |
| 20 | 0.60 | 1.72 |
| 30 | 0.88 | 2.60 |
| 40 | 1.14 | 3.60 |
| 50 | 1.50 | 5.00 |
| 60 | 2.20 | 8.40 |

Table 4

| Load Value Data at 50% compression | | | |
|---|---|---|---|
| | | Example 1 | Comparative Example 1 |
| Load Value [N/cm²] | In the course of Compression | 1.50 | 5.00 |
| | In the course of Return | 0.36 | 3.26 |
| Load value ratio (%) | | 24.0 | 65.2 |
| * Load value ratio = (load value in the course of returning)/(load value in the course of compression)×100 | | | |

Table 5

| Temperature [°C] | Example 1 | Comparative Example 1 | Vibration Strain [%] |
|---|---|---|---|
| -30 | 1.349 | 0.408 | 0.10 |
| -20 | 0.690 | 0.192 | 0.58 |
| -10 | 0.317 | 0.152 | 1.70 |
| 0 | 0.196 | 0.132 | 1.80 |
| 10 | 0.187 | 0.128 | 1.86 |
| 20 | 0.176 | 0.105 | 1.90 |
| 23 | 0.154 | 0.120 | 1.91 |
| 30 | 0.135 | 0.102 | 1.91 |
| 40 | 0.144 | 0.098 | 1.91 |
| 50 | 0.132 | 0.080 | 1.91 |
| 60 | 0.132 | 0.092 | 1.91 |
| 70 | 0.118 | 0.090 | 1.91 |
| 80 | 0.102 | 0.080 | 1.91 |

Example 2 and Comparative Example 2

Each of the crosslinked rubber sponge materials of Example 1 and Comparative Example 1 was applied as a sealant member to a weather strip watertight part, and its watertight performance was evaluated by the following watertight test. The crosslinked rubber sponge material of Example 1 was used in Example 2, and that of Comparative Example 1 was used in Comparative Example 2.

<Watertight Test>

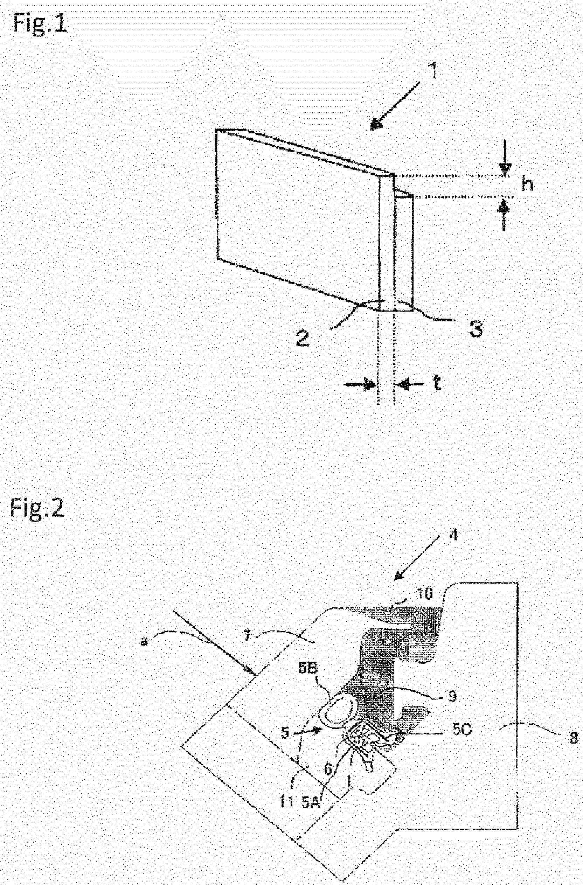

Fig. 2 shows a state of the watertight test in which a structure of a rear trunk or a back door of a vehicle is reproduced. An automotive weather strip 5 is assembled in the periphery of an opening of the trunk or the back door, has a metal or plastic core material 5C, and is further constituted by a grip part 5A fitted to a flange 1 projectedly formed from a body and a hollow-shaped seal member 5B having an approximately circular cross-section with a hollow space in the center, which prevents wind, water, dust, sound and the like that collide against the door from entering through the periphery of the door. As shown in Fig. 2, the common trunk or back door weather strip having a length of 200 mm was used. A door-closed state is reproduced by a jig 8 reproducing the body side and a jig 7 reproducing the door side. The upper side on the basis of the weather strip 5 in Fig. 2 corresponds to the outside of the vehicle, and the lower side corresponds to the inside of the vehicle. Since water enters from the outside of the vehicle, water was filled in a space 9 on the above-mentioned outside of the vehicle as shown in Fig. 2, and it was observed in a space 11 whether water leaked into the inside of the vehicle or not. For the door closed state (i.e., the state where the body and the door are fitted) of the vehicle, there is a proper position (normal position) for each type of vehicle. This test was performed in the normal position.

The sealant member of the present invention is disposed on a bottom of the inside of the grip part 5A having an approximately U-shaped cross-section, that is to say, on a position on which the sealant member is pressurized and compressed by a leading edge of the flange when the grip part 5A is fitted to the flange. The sealant member is pushed in by the leading edge of the flange to take a bent state. The flange 1 of the vehicle body is constituted by two panels layered by each other having a level difference structure as shown in Fig. 1. In the flange 1 having the level difference structure shown in Fig. 1, a panel 2 having a thickness t of 1.2, 1.8 or 2.1 mm is layered by a panel 3 having a thickness of 1.3 mm to provide a level difference having a height of h.

The weather strip in which a crosslinked rubber sponge material having a thickness of 2.4 mm and a width of 4.2 mm was mounted on a position corresponding to the watertight part 6 of the weather strip 5 shown in Fig. 2 to serve as a watertight part (sealant member) 6 was compressed in the direction of the arrow a in the same manner as in the case of an actual vehicle to compress the crosslinked rubber sponge material by 60% in it's thickness direction by the flange 1. Then, water was poured in the space 9, and the watertight test was performed with a test device 4. The results of Example 2 are shown in Table 6, and the results of Comparative Example 2 are shown in Table 7. "A" indicates no water leakage, "B" indicates the occurrence of water leakage, and "-" indicates no evaluation.

Table 6

| Setting of Uneven Level | | Height: h [mm] | | |
|---|---|---|---|---|
| | | 1 | 1.5 | 2 |
| Thickness: t [mm] | 1.2 | A | A | - |
| | 1.8 | A | A | A |
| | 2.1 | - | A | A |

Table 7

| Setting of Uneven Level | | Height: h [mm] | | |
|---|---|---|---|---|
| | | 1 | 1.5 | 2 |
| Thickness: t [mm] | 1.2 | A | A | - |
| | 1.8 | A | B | - |
| | 2.1 | - | B | - |

From Tables 2 to 7, it is understood that the weather strip of Example 2 in which the crosslinked rubber sponge material (foam rubber material) satisfying the characteristics of the present invention is used as the sealant member is excellent in watertight performance compared with that of Comparative Example 2. Further, although an example of application to the trunk weather strip is shown in this example, all of conventionally known crosslinked or non-crosslinked rubber sponge materials having a specific gravity of 0.05 to 0.4 can be replaced by the crosslinked rubber sponge materials of the present invention in any weather strips such as a door opening weather strip attached to the periphery of an opening on the vehicle body side of a door through which people get on and off a vehicle, a door weather strip attached to the periphery of a door, a glass run for holding a door glass movable up and down and a belt line weather strip attached to a belt line of a vehicle.

Examples 3 to 6 and Comparative Example 3

Blending ingredients (parts by mass) described in Table 8 were kneaded to obtain rubber compositions, which were extrusion molded into a sheet form, and vulcanized and foamed in a high-temperature atmosphere to produce crosslinked rubber sponge materials.

The ingredients are the same as those shown in Table 1, except that the grade (product number) of carbon black of ingredient (d) is different from Table 1, and that ingredient (c) is OBSH alone. Accordingly, the terpene-based resin is YS Resin TO-105 (manufactured by Yasuhara Chemical Co., Ltd.).

Table 8

|  | Examples 3 to 9 and Comparative Example 3 |
| --- | --- |
| (a) Olefin-Based Rubber | 100 |
| (b) Terpene-Based Resin | T |
| (d) Carbon Black | 60 |
| (e) Inorganic Filler | 10 |
| (f) Softening Agent | 90 |
| (c) Foaming Agent | 15 |
| (g) Crosslinking Agent | 1 |
| (h) Vulcanization Accelerator | 8 |
| Total | 284+T |

The crosslinked rubber sponge materials obtained was evaluated for compressive load in the same manner as in Example 1. However, a test specimen having a thickness of 3 mm was used. Load values at 50% compression in the course of compression and in the course of returning are shown in Table 9 and Fig. 12. Further, the load value ratio (load value at 50 % compression in the course of returning/load value at 50% compression in the course of compression)×100) is also shown.

Table 9 also shows results of specific gravity, water absorption rate and watertight test. The specific gravity and the water absorption rate were measured in the same manner as in Example 1. However, there was used a test specimen having a thickness of 3 mm and a length of 30 mm. The watertight test was performed in the same manner as in Example 2. That is to say, each of the crosslinked rubber sponge materials of Examples 3 to 6 and Comparative Example 3 was applied as a sealant member to a weather strip watertight part, and the watertight performance thereof was evaluated.

Table 9

| | | Comparative Example 3 | Example 3 | Example 4 | Example 5 | Example 6 |
| --- | --- | --- | --- | --- | --- | --- |
| Amount of Terpene-Based Resin Added T [phr] | | 0 | 30 | 40 | 50 | 60 |
| Specific Gravity [-] | | 0.33 | 0.30 | 0.31 | 0.32 | 0.32 |
| Water Absorption Rate [%] | | 9.9 | 11.1 | 10.8 | 9.5 | 10.3 |
| Load Value at 50% Compression [N/cm$^2$] | Compression | 10.30 | 6.64 | 5.16 | 4.16 | 3.56 |
| | Returning | 8.20 | 2.72 | 1.40 | 0.82 | 0.63 |
| Load value ratio at 50% Compression (Returning/Compression (%)) | | 79.6 | 41.0 | 27.2 | 19.7 | 17.7 |

(continued)

|  | Comparative Example 3 | Example 3 | Example 4 | Example 5 | Example 6 |
|---|---|---|---|---|---|
| Watertight Test | The same as Table 7 | The same as Table 6 | The same as Table 6 | The same as Table 6 | The same as Table 6 |

From Tables 8 and 9, it is understood that the weather strips of Examples 3 to 6 in which the crosslinked rubber sponge materials satisfying the load value ratio of the present invention are used as the sealant members are excellent in watertight performance compared with that of Comparative Example 3.

Examples 7 to 9

In the blending ingredients (parts by mass) shown in Table 8, the kind of the terpene-based resin (b) was changed as shown in Table 10, and the resin was kneaded in a blended amount of 50 phr (parts per hundred rubber) to obtain rubber compositions, which were extrusion molded into a sheet form, and vulcanized and foamed in a high-temperature atmosphere to produce crosslinked rubber sponge materials.

The crosslinked rubber sponge materials obtained was evaluated for compressive load in the same manner as in Example 1. However, the test specimen having a thickness of 3 mm was used. Load values at 50% compression in the course of compression and in the course of returning are shown in Table 10. Further, the load value ratio (load value at 50% compression in the course of returning/load value at 50 % compression in the course of compression)$\times$100) is also shown.

Table 10 also shows results of specific gravity, water absorption rate and watertight test. The specific gravity and the water absorption rate were measured in the same manner as in Example 1. However, there was used a test specimen having a thickness of 3 mm and a length of 30 mm. The watertight test was performed in the same manner as in Example 2. That is to say, each of the crosslinked rubber sponge materials of Examples 7 to 9 was applied as a sealant member to a weather strip watertight part, and the watertight performance thereof was evaluated.

Table 10

|  |  | Example 7 | Example 8 | Example 9 |
|---|---|---|---|---|
|  |  | YS Resin TO-105 | YS Resin TO-115 | YS Polyster T-130 |
| Kind |  | Modified Terpene Resin | Modified Terpene Resin | Terpene-Phenol Resin |
| Average Molecular Weight |  | 700 | 700 | 900 |
| Softening Point [°C] |  | 105 | 115 | 130 |
| Glass Transition Temperature [°C] |  | 45 | 45 | 87 |
| Specific Gravity [-] |  | 0.28 | 0.31 | 0.31 |
| Water Absorption Rate [%] |  | 15 | 18 | 27 |
| Load Value at 50% Compression [N/cm$^2$] | Compression | 4.20 | 4.80 | 3.60 |
|  | Returning | 0.70 | 0.60 | 0.61 |
| Load value ratio at 50% Compression (Returning/Compression (%)) |  | 16.7 | 12.5 | 16.9 |
| Watertight Test |  | The same as Table 6 | The same as Table 6 | The same as Table 6 |

From Table 10, it is understood that the weather strips of Examples 7 to 9 in which the crosslinked rubber sponge materials satisfying the load value ratio of the present invention are used as the sealant members are excellent in watertight performance.

Examples 10 to 12 and Comparative Example 4

In the blending ingredients (parts by mass) shown in the above-mentioned Table 8, carbon black of the same grade as in Example 1 and Comparative Example 1 was used as ingredient (d), ADCA and OBSH were used as the foaming agent (ingredient (c)), YS Resin TO-105 (manufactured by Yasuhara Chemical Co., Ltd.) was used as the terpene-based resin, and the amount of the terpene-based resin was changed. The other ingredients were the same as in Table 8. The vulcanization and foaming were performed to produce crosslinked rubber sponge materials.

The crosslinked rubber sponge materials obtained were evaluated in the same manner as in Examples 3 to 6 and Comparative Example 3. The results thereof are shown in Table 11.

Table 11

| | | Comparative Example 4 | Example 10 | Example 11 | Example 12 |
|---|---|---|---|---|---|
| Amount of Terpene-Based Resin Added T [phr] | | 0 | 30 | 40 | 50 |
| Specific Gravity [-] | | 0.23 | 0.21 | 0.21 | 0.21 |
| Water Absorption Rate [%] | | 7.8 | 6.6 | 6.8 | 6.4 |
| Load Value at 50% Compression [N/cm²] | Compression | 7.56 | 5.00 | 3.50 | 2.18 |
| | Returning | 5.31 | 2.41 | 1.01 | 0.39 |
| Load value ratio at 50% Compression (Returning/Compression (%)) | | 70.2 | 48.2 | 28.9 | 17.9 |
| Watertight Test | | The same as Table 7 | The same as Table 6 | The same as Table 6 | The same as Table 6 |

From Table 11, it is understood that the weather strips of Examples 10 to 12 in which the crosslinked rubber sponge materials satisfying the load value ratio of the present invention are used as the sealant members are excellent in watertight performance compared with that of Comparative Example 4.

As described above, the weather strips of Examples in which the foam rubber materials satisfying the load value ratio of the present invention are used as the sealant members are excellent in watertight performance. The reason for this is considered to be that when assembled to the vehicle body, the weather strip is deformed while being adapted to an assembling position of the vehicle body with a suitable load value, and is not lifted up immediately after assembling because a lift-up power thereof is small after assembling, resulting in bringing about a high space-filling effect that is required for the sealant member.

Further, a non-dry sealant cannot be reassembled or contaminates the environment because once it is assembled to a vehicle body in assembling it adheres to the vehicle body side, and the small compression set value cannot be achieved. However, a sealant member of the present invention is the crosslinked rubber sponge material, so that adhesion thereof onto the vehicle body side is not concerned about. Further, it is also excellent in compression set (i.e., the compression set value is small), so that high watertight performance can be maintained over time.

Industrial Applicability

The foam rubber material of the present invention has high watertight performance and excellent sealing properties, and can be suitably used as the sealant member for a weather strip.

While the invention has been described in detail and with reference to specific embodiments thereof, it will be apparent to those skilled in the art that various changes and modifications can be made therein without departing from the scope thereof as defined in the claims.

Description of Reference Numerals and Signs

1: Flange
2, 3: Panels

4: Test device
5: Weather strip
5a: Glass run
5A: Grip part
5B: Seal part
5C: Core material
5S: Claw part
5T: Seal lip
5U: Lip part
6: Watertight part (sealant member)
7, 8: Jigs reproducing door structures
9: Space
10: Water
11: Space
12: Clip
13: Door sash

**Claims**

1. A foam rubber material for a weather strip comprising a crosslinked rubber sponge material having a load value ratio satisfying the following relationship:

   load value ratio (%) = $B/A \times 100 \leq 50$,
   wherein A is a load value at 50% compression in the course of compression deformation, and B is a load value at 50% compression in the course of returning from the deformation, and A and B are measured in accordance with JIS K6767 (2007) at a compression rate and a returning rate of 20 mm/ min each;
   and wherein the cross-linked rubber sponge material comprises an EPDM copolymer rubber and a pressure sensitive adhesive, wherein the pressure sensitive adhesive is a terpene-based resin.

2. The foam rubber material for a weather strip according to claim 1, wherein A is 10 N/cm$^2$ or less, and B is 3 N/cm$^2$ or less.

3. The foam rubber material for a weather strip according to claim 1, wherein the cross-linked rubber sponge material further comprises , optionally, any one or more of carbon black, an inorganic filler, a softening agent, and a vulcanization accelerator.

4. The foam rubber material for a weather strip according to claim 1, wherein the terpene-based resin has a glass transition point of 30-100°C, preferably 40-90°C.

5. The foam rubber material for a weather strip according to claim 1, wherein the terpene-based resin is used in an amount of 3 to 75 parts by mass, preferably 10 to 70 parts by mass, more preferably 30 to 65 parts by mass, particularly preferably 40 to 60 parts by mass, based on 100 parts by mass of EPDM.

6. The foam rubber material for a weather strip according to any of claims 1 to 5, having a specific gravity of from 0.05 to 0.40 based on the density of water (1.0g/cm$^3$);
   wherein the specific gravity is measured in accordance with JIS K7112 (2007), method A.

7. The foam rubber material for a weather strip according to any of claims 1 to 6, having a water absorption rate of from 1 to 100% and a tan $\delta$ (loss elastic modulus/storage elastic modulus) value at a standard temperature (23°C) of 0.125 or more
   wherein the water absorption rate is determined in accordance with the method described in [0019] of the description and tan $\delta$ is measured in accordance with the method described in [0034] of the description.

8. A sealant member for a weather strip, comprising the foam rubber material according to any of claims 1 to 7.

**Patentansprüche**

1. Schaumgummimaterial für einen Dichtungsstreifen, das ein vernetztes Gummischwammmaterial umfasst, das ein Belastungswertverhältnis hat, das den folgenden Zusammenhang erfüllt:

   Belastungswertverhältnis (%) = B/A×100≤50,
   wobei A ein Belastungswert bei 50% Stauchung im Verlauf einer Stauchverformung ist und B ein Belastungswert bei 50% Stauchung im Verlauf einer Rückkehr aus der Verformung ist und A und B in Übereinstimmung mit JIS K6767 (2007) bei einer Stauchungsrate und einer Rückkehrrate von jeweils 20 mm/min gemessen werden; und wobei das vernetzte Gummischwammmaterial einen EPDM-Copolymer-Gummi und einen Haftkleber umfasst, wobei der Haftkleber ein auf Terpen basierendes Harz ist.

2. Schaumgummimaterial für einen Dichtungsstreifen nach Anspruch 1, wobei A 10 N/cm$^2$ oder weniger und B 3 N/cm$^2$ oder weniger beträgt.

3. Schaumgummimaterial für einen Dichtungsstreifen nach Anspruch 1, wobei das vernetzte Gummischwammmaterial außerdem optional einen oder mehr der Bestandteile Ruß, anorganischer Füllstoff, Weichmacher und Vulkanisationsbeschleuniger umfasst.

4. Schaumgummimaterial für einen Dichtungsstreifen nach Anspruch 1, wobei das auf Terpen basierende Harz einen Glasübergangspunkt von 30-100°C, vorzugsweise 40-90°C hat.

5. Schaumgummimaterial für einen Dichtungsstreifen nach Anspruch 1, wobei das auf Terpen basierende Harz beruhend auf ein 100 Masseteilen EPDM in einer Menge von 3 bis 75 Masseteilen, vorzugsweise 10 bis 70 Masseteilen, besser noch 30 bis 65 Masseteilen, insbesondere 40 bis 60 Masseteilen verwendet wird.

6. Schaumgummimaterial für einen Dichtungsstreifen nach einem der Ansprüche 1 bis 5, das beruhend auf der Dichte von Wasser (1,0 g/cm$^3$) eine spezifische Dichte von 0,05 bis 0,40 hat; wobei die spezifische Dichte in Übereinstimmung mit JIS K7112 (2007), Verfahren A gemessen wird.

7. Schaumgummimaterial für einen Dichtungsstreifen nach einem der Ansprüche 1 bis 6, das eine Wasserabsorptionsrate von 1 bis 100% und einen Wert für tan δ (elastischer Verlustmodul/elastischer Speichermodul) bei einer Standardtemperatur (23°C) von 0,125 oder mehr hat, wobei die Wasserabsorptionsrate in Übereinstimmung mit dem Verfahren bestimmt wird, das in [0019] der Beschreibung beschrieben ist, und tan δ in Übereinstimmung mit dem Verfahren gemessen wird, das in [0034] der Beschreibung beschrieben ist.

8. Dichtungselement für einen Dichtungsstreifen, das das Schaumgummimaterial gemäß einem der Ansprüche 1 bis 7 umfasst.

**Revendications**

1. Un matériau en caoutchouc mousse pour bande de calfeutrement comprenant un matériau en éponge caoutchouc réticulé ayant un rapport de valeur de charge satisfaisant la relation suivante :

   rapport de valeur de charge (%) = B/A×100≤50,
   dans lequel A est une valeur de charge à une compression de 50% au cours de la déformation de compression, et B est une valeur de charge à une compression de 50% au cours du retour de la déformation, et A et B sont mesurés selon JIS K6767 (2007) à un taux de compression et un taux de retour de 20 mm/mn chacun ; et dans lequel le matériau en éponge caoutchouc réticulé comprend un caoutchouc de copolymère EPDM et un adhésif sensible à la pression, dans lequel l'adhésif sensible à la pression est une résine à base de terpène.

2. Le matériau en caoutchouc mousse pour bande de calfeutrement selon la revendication 1, dans lequel A est égal ou inférieur à 10 N/cm$^2$ et B est égal ou inférieur à 3 N/cm$^2$.

3. Le matériau en caoutchouc mousse pour bande de calfeutrement selon la revendication 1, dans lequel le matériau en éponge caoutchouc réticulé comprend en outre, en option, une ou plusieurs substances parmi le noir de carbone, une matière de remplissage inorganique, un agent assouplissant, un agent moussant et un accélérateur de vulcanisation.

4. Le matériau en caoutchouc mousse pour bande de calfeutrement selon la revendication 1, dans lequel la résine à base de terpène a un point de transition vitreuse compris entre 30 et 100°C, de préférence entre 40 et 90°C.

5. Le matériau en caoutchouc mousse pour bande de calfeutrement selon la revendication 1, dans lequel la résine à base de terpène est utilisée dans une quantité comprise entre 3 et 75 parties en masse, de préférence entre 10 et 70 parties en masse, plus préférablement entre 30 et 65 parties en masse, très préférablement entre 40 et 60 parties en masse, sur la base de 100 parties en masse d'EPDM.

6. Le matériau en caoutchouc mousse pour bande de calfeutrement selon l'une quelconque des revendications 1 à 5, ayant une densité comprise entre 0,05 et 0,40 sur la base de la densité de l'eau (1,0 g/cm$^3$);
dans lequel la densité est mesurée selon JIS K7112 (2007), méthode A.

7. Le matériau en caoutchouc mousse pour bande de calfeutrement selon l'une quelconque des revendications 1 à 6, ayant un taux d'absorption d'eau compris entre 1 et 100% et une valeur tan $\delta$ (module élastique de perte / module élastique de stockage) à une température standard (23°C) égale ou supérieure à 0,125
dans lequel le taux d'absorption d'eau est déterminé selon la méthode décrite dans [0019] de la description et la valeur tan $\delta$ est mesurée selon la méthode décrite dans [0034] de la description.

8. Un élément d'étanchéité pour bande de calfeutrement, comprenant le matériau en caoutchouc mousse selon l'une quelconque des revendications 1 à 7.

Fig.1

Fig.2

Fig.3

5

5C

5B

6

5S

5A

Fig.4

5T

7a

8a

5

5T

5B

6

12

Fig.5

5B

5

6

5T

EP 2 727 955 B1

Fig.6

5a

5U

6

Fig.7

13

6

5a

5U

14

Fig.8

Rate of
Compression or Returning
20mm/min.

18

## Fig.9

**Load Chart Observed in Compressive Load Test**

## Fig.10

Fig.11

Fig.12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008087505 A
- JP 2011116882 A
- JP 2012017452 A